# EUROPEAN PATENT APPLICATION

(11) **EP 1 764 714 A1**
(43) Date of publication of application: **21.03.2007**
(21) Application number: 06254785.6
(22) Date of filing: 14.09.2006
(51) Int. Cl.: G06F 17/30

(54) **Method and apparatus for providing reference information, method of displaying reference information, and computer program product**

(30) Priority: 14.09.2005 JP 2005267677; 19.07.2006 JP 2006197331
(71) Applicant: Ricoh Company, Ltd., Tokyo 143-8555 (JP)
(72) Inventor: Imai, Takuya c/o Ricoh Co., Ltd., Tokyo 143-8555 (JP); Takatsu, Kazunori, Yokohama-shi Kanagawa (JP); Sahashi, Yukiko c/o Ricoh Co., Ltd., Tokyo 143-8555 (JP); Emori, Mototsugu c/o Ricoh Co., Ltd., Tokyo 143-8555 (JP)
(74) Representative: Mounteney, Simon James

(57) **Abstract**

A positional-information acquiring unit (109) acquires positional information relating to a position of an object or a user in a predetermined region. An extracting unit (111) extracts a hierarchized region where the object or the user exists, based on the acquired positional information. A selection receiving unit (107) receives a selection of a desired region from among the extracted hierarchized regions. An information acquiring unit (108) acquires the reference information corresponding to the selected region from the region correspondence information. An output unit (110) outputs the acquired reference information.

## Description

### BACKGROUND OF THE INVENTION

### 1. Field of the Invention

The present invention relates to an information processing apparatus that provides information that can be referred to according to positions of users or objects, an information processing method, a display method, and a computer product.

### 2. Description of the Related Art

With the recent development of network technology, users can easily refer to and add to contents on a network. This makes it easy to manage contents created by a plurality of users on a network.

These circumstances have greatly increased contents to be managed on a network. An issue arises of how to manage contents shared by a plurality of users. For example, an invention according to Japanese Patent Application Laid-open No. 2004-46799 discloses a method of referring to contents associated with locations and spaces. By managing the contents in correspondence with locations and spaces, this technique enables a user to refer to shared contents by selecting a location.

However, the technique described in Japanese Patent Application Laid-open No. 2004-46799 merely selects a location, and does not provide any contents that corresponds to a position by using a radio frequency identification (RFID) tag or the like to detect the user's position.

That is, Japanese Patent Application Laid-open No. 2004-46799 does not consider detecting positional information using an RFID tag or the like when providing contents. Even if the position of the user is detected, it is difficult to identify a location including the detected position and to provide contents corresponding to that location.

For example, when an RFID tag is used to detect that a user is 'on the eighth floor of the Patent Building in Kasumigaseki, Chiyoda Ward, Tokyo', there is no way of determining whether to provide contents corresponding to Chiyoda Ward, or to Kasumigaseki, or to the Patent Building, or to the eighth floor of the Patent Building.

### SUMMARY OF THE INVENTION

It is an object of the present invention to at least partially solve the problems in the conventional technology.

An information processing apparatus according to one aspect of the present invention includes a storing unit that stores region correspondence information in which each of regions that are hierarchized from a predetermined region toward a narrow region is associated with reference information that can be referred to at the region; a positional-information acquiring unit that acquires positional information relating to a position of an object or a user in the predetermined region; an extracting unit that extracts a hierarchized region where the object or the user exists by searching the stored region correspondence information based on the acquired positional information; a selection receiving unit that receives a selection of a desired region from among the extracted hierarchized regions; an information acquiring unit that acquires the reference information corresponding to the selected region from the region correspondence information; and an output unit that outputs the acquired reference information.

An information processing method according to another aspect of the present invention includes storing region correspondence information in which each of regions that are hierarchized from a predetermined region toward a narrow region is associated with reference information that can be referred to at the region; acquiring positional information relating to a position of an object or a user in the predetermined region; extracting a hierarchized region where the object or the user exists by searching the stored region correspondence information based on the acquired positional information; receiving a selection of a desired region from among the extracted hierarchized regions; acquiring the reference information corresponding to the selected region from the region correspondence information; and outputting the acquired reference information.

A method of displaying reference information, according to still another aspect of the present invention includes displaying, from among a plurality of regions that are hierarchized from a predetermined region toward a narrow region, a region including a position of a user or an object for each hierarchy; receiving a selection of a desired region from among the displayed regions; and displaying reference information that can be referred to at the selected region.

A computer program product according to still another aspect of the present invention includes a computer usable medium having computer readable program codes embodied in the medium that when executed causes a computer to execute storing region correspondence information in which each of regions that are hierarchized from a predetermined region toward a narrow region is associated with reference information that can be referred to at the region; acquiring positional information relating to a position of an object or a user in the predetermined region; extracting a hierarchized region where the object or the user exists by searching the stored region correspondence information based on the acquired positional information; receiving a selection of a desired region from among the extracted hierarchized regions; acquiring the reference information corresponding to the selected region from the region correspondence information; and outputting the acquired reference information.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of a configuration of a contents-sharing system according to a first embodiment of the present invention;
Fig. 2 is a structure diagram of a location management table stored by a contents database (DB) of a contents-sharing server according to the first embodiment;
Fig. 3 is an explanatory diagram of regions of a location '8F' and positions of users managed by the contents-sharing server according to the first embodiment;
Fig. 4 is a structure diagram of a group management table stored by the contents DB of the contents-sharing server according to the first embodiment;
Fig. 5 is a structure diagram of a group management table stored by the contents DB of the contents-sharing server according to the first embodiment;
Fig. 6 is an example of a screen displayed when a contents display unit of a client according to the first embodiment receives a selection of a location from a user;
Fig. 7 is an example of a new contents creation screen displayed by the contents display unit according to the first embodiment when a 'New' button shown in Fig. 6 is pressed;
Fig. 8 is a flowchart of a process procedure of authenticating a user, browsing contents, and adding and changing the contents where necessary in a contents-sharing server according to the first embodiment;
Fig. 9 is a flowchart of a contents adding process procedure in an adding unit in the contents-sharing server according to the first embodiment;
Fig. 10 is a flowchart of a periodical contents deleting process procedure in a deleting unit in the contents-sharing server according to the first embodiment;
Fig. 11 is an example of a screen displayed when a contents display unit of a client according to a modified example receives a selection of a location from a user; and
Fig. 12 depicts a hardware configuration of a personal computer (PC) that executes a program for realizing functions of a contents-sharing server.

### DETAILED DESCRIPTION OF THE PREFERRED EMBODIMENTS

Exemplary embodiments of the present invention are explained in detail below with reference to the accompanying drawings.

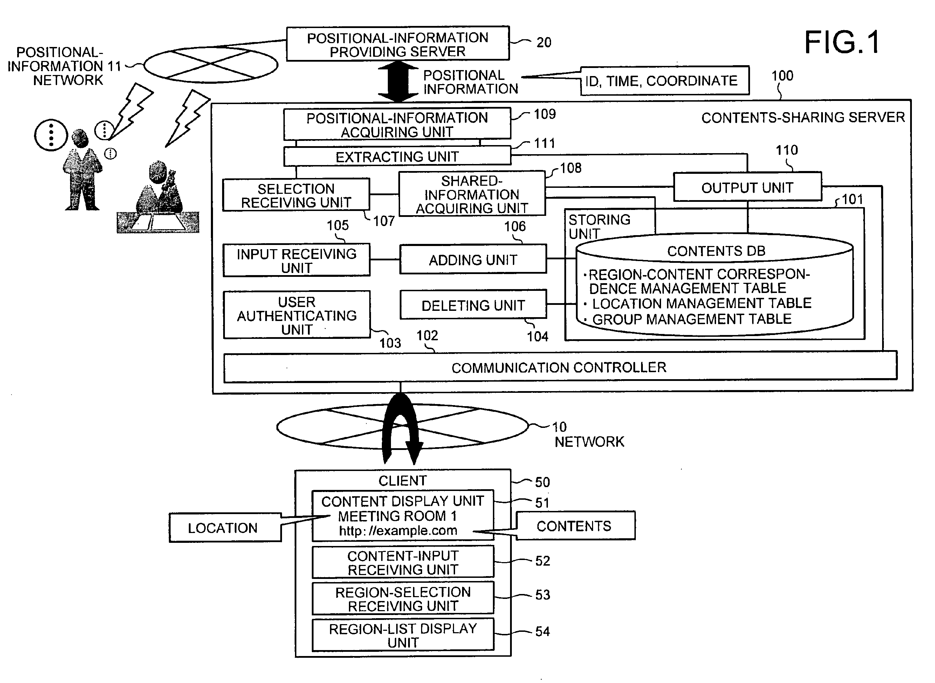

Fig. 1 is a block diagram of a configuration of a contents-sharing system according to a first embodiment of the present invention. The contents-sharing system according to the first embodiment includes a positional-information providing server 20, a contents-sharing server 100, and a client 50. Based on positional information of a user detected by the positional-information providing server 20, the contents-sharing server 100 can provide contents to the client 50 used by the user.

The positional-information providing server 20 detects positional information of a user, and outputs the positional information together with an identification (ID) that identifies the user and a detection time to the contents-sharing server 100. Specifically, the user is equipped with a wireless communication device. Readers that detect the wireless communication device are provided at each location. The positional-information providing server 20 can acquire positional information of the user based on a detection signal input from a reader via a positional-information network 11.

Any type of wireless communication device can provided for the user, for example, an RFID tag, Bluetooth, ZigBee. The wireless communication device is not limited to these short-range communication methods, and a global positioning system (GPS) or the like can be used instead.

Since it is preferable to record the user's activity without his performing a special operation and be able to restrict the range somewhat, it is preferable to use a small, low-power RFID tag as the short-range wireless communication device. An RFID system tag broadly includes an IC chip and an antenna, data being transmitted and received via this antenna.

There are two types of RFID tag. One type uses an active method, in which the RFID tag itself includes a battery and performs communication by transmitting electrical waves. Another type uses a passive method, where the tag performs communication after being operated by externally provided power. While either method can be used in the present embodiment, to detect the position of the user without a special operation, the active method is preferable since it has a longer communication distance of several meters. Therefore, the RFID tag of the active method is used in the present embodiment. While the tag can be attached anywhere, it is preferably attached to an item that the user always carries, such as an employee ID card or a mobile telephone.

An RFID communication system has an anti-collision function for avoiding confusion of communications between a plurality of tags. When tags and reader-writers are equipped with this function, the RFID system realizes a multi-read function of reading/writing a plurality of tags simultaneously. This multi-read function is very important in the present invention, which naturally considers the possibility of a plurality of persons being present at the same location. Since an RFID system has a remarkably fast processing speed, it can acquire positional information in real time.

The client 50 includes a contents display unit 51, a contents-input receiving unit 52, a region-selection receiving unit 53, and a region-list display unit 54. The client 50 displays a list of locations including positions of users (hereinafter "regions"), receives a selection of a location from the list, and displays contents corresponding to the selected location. It also makes additions, changes, and the like, to the contents. To handle these contents, a user must log in to the contents-sharing server 100 described below from the client 50. This login process can identify a user who is using the client 50 after the user authentication, thereby providing contents corresponding to the user's position.

While the client 50 can include any type of apparatus, an apparatus whose location can change according to the user's movement is preferable, such as a portable PC and a mobile information terminal.

Although different from the arrangement of the present embodiment, when providing contents, the position of an object such as an apparatus can be used instead of the position of the user. Conceivably, this object includes a tag or the like that enables its position to be detected. One example of such an object is a projector. For example, contents can be provided according to the location where the projector is installed. The process performed is the same as that when using the position of the user explained below; therefore its explanation is omitted.

The contents-input receiving unit 52 receives input from the user when he refers to contents, when selecting a suitable location from a plurality of locations including the position of the user, and when making additions or changes to the contents. The contents-input receiving unit 52 can also receive input such as a user ID and a password when authenticating the user.

The region-list display unit 54 displays a list of regions (locations) including a position where a user using the client 50 is detected on a monitor or the like (not shown). The regions displayed in this list have a hierarchized structure. Specific examples of screens, hierarchized structures, and the like, will be described below.

The region-selection receiving unit 53 receives a selection of a region (location) displayed as a list via an input device (not shown) or the like.

The contents display unit 51 displays contents corresponding to a region selected by the region-selection receiving unit 53, and displays a screen when the user makes additions/changes to the contents. An example of a screen displayed by the contents display unit 51 will be described below.

As shown in Fig. 1, the contents-sharing server 100 includes a storing unit 101, a communication controller 102, a user authenticating unit 103, a deleting unit 104, an input receiving unit 105, an adding unit 106, a selection receiving unit 107, a shared-information acquiring unit 108, a positional-information acquiring unit 109, an output unit 110, and an extracting unit 111 in the inside thereof. Based on the positional information of the user acquired from the positional-information providing server 20, the contents-sharing server 100 outputs contents to the client 50, or makes additions or changes and the like to the contents.

The storing unit 101 stores a contents DB. The contents DB includes a region-contents correspondence management table, a location management table, and a group management table. While in the present embodiment, the storing unit 101 uses a hard disk drive (HDD), various conventional storing units can be used, for example, an optical disk, a memory card.

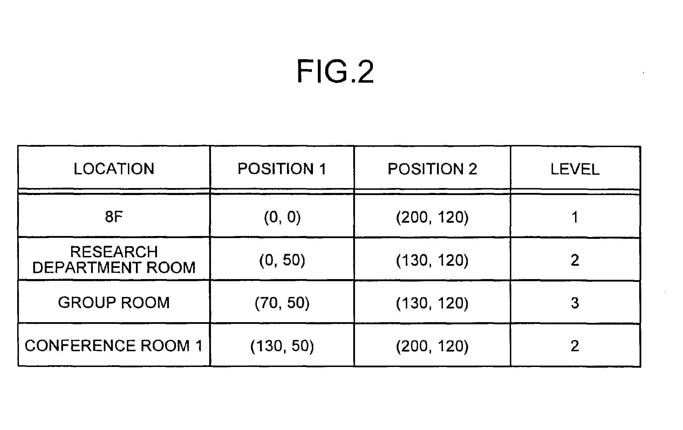

Fig. 2 is a structure diagram of the location management table. As shown in Fig. 2, the location management table stores a location, a position 1, a position 2, and a level in correspondence with each other. Each field of the location management table will be explained. The fields 'Position 1' and 'Position 2' are used in determining a region. Specifically, the region identified as the location of each record is a rectangular one having positional coordinates of the fields 'Position 1' and 'Position 2' as its vertexes.

The 'Level' field of Fig. 2 indicates the hierarchized structure of that location. For example, 'Group room' has a level of '3', indicating that it is the smallest subdivided region in the record of Fig. 2. The level increases with 'Research department room' and '8F', indicating that the regions indicated by these records are larger. In other words, the regions are hierarchized in decreasing size from '8F', 'Research department room' until 'Group room'. That is, the 'Level' field represents the layer for identifying each location. Thus in the present embodiment, layers are used as sizes for subdividing the regions.

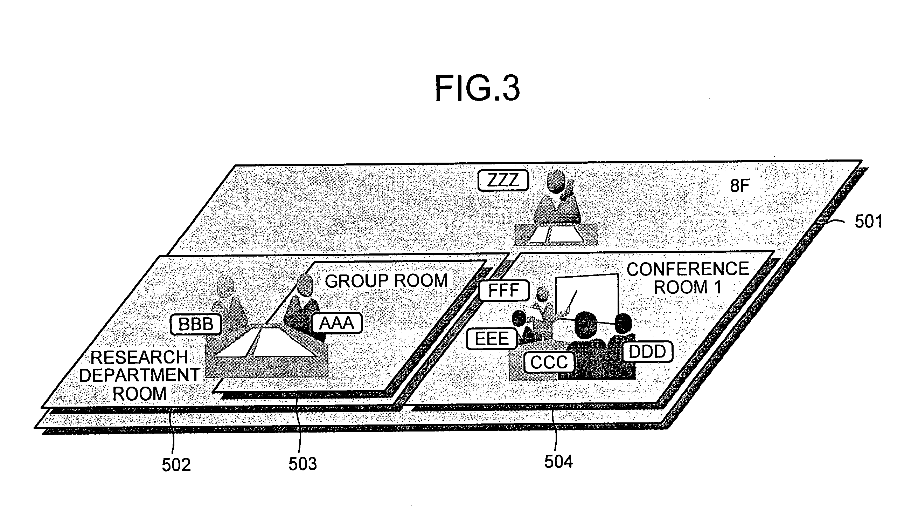

Fig. 3 is an explanatory diagram of regions of location '8F' and positions where users are present according to the present embodiment. As shown in Fig. 3, a region '8F' 501 includes 'Research department room' 502 and 'Conference room 1' 504. 'Research department room' 502 includes 'Group room' 503. Thus in the present embodiment, the locations form a hierarchized structure as mentioned above in the explanation of the 'Level' field.

When displaying the locations in this hierarchized structure, a position of a user can be expressed using a plurality of locations of different layers. For example, as shown in Fig. 3, a user 'AAA' is in the 'Group room' 503 of the 'Research department room' 502 on the '8F' 501 of this building. When displaying the contents, the user 'AAA' selects the location where he wishes to display the corresponding contents from among three locations of different layers, namely '8F' 501, 'Research department room' 502, and 'Group room' 503.

For example, if the user 'AAA' wishes to transmit information to a user 'BBB' in the same research department, he adds the contents in correspondence with 'Research department room' 802. If the user 'AAA' wishes to share information over a wider region, '8F' is specified as the location.

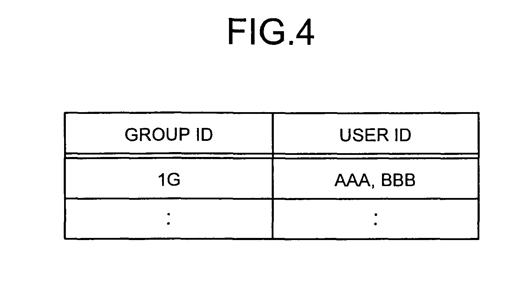

Fig. 4 is a structure diagram of the group management table. As shown in Fig. 4, the group management table stores group IDs and user IDs in correspondence with each other. This makes it possible to identify users who belong to each group.

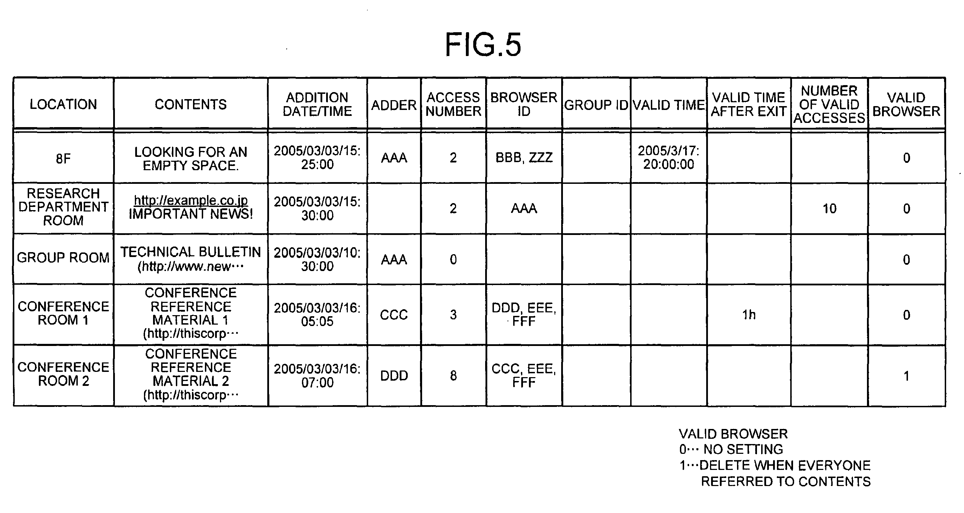

Fig. 5 is a structure diagram of the region-contents correspondence management table. As shown in Fig. 5, the region-contents correspondence management table stores each location (region), its contents, addition date/time, an adder, an access number, browser ID, a group ID, a valid time, a valid time after exit, number of valid accesses, and a valid browser in correspondence with each other. As shown in Fig. 5, the location and the contents are stored in correspondence with each other. The region-contents correspondence table includes a 'Browser' field that identifies a user who browses, and a 'Group ID' field. When the 'Browser' and 'Group ID' fields are not set, all users are permitted to refer to the contents. The addition times and users who make additions can be stored in the 'Addition time' and 'Adder' fields, thereby increasing the convenience.

Users who are permitted to browse can be identified using the 'Browser' and 'Group ID' fields. This enables the contents to be shared more appropriately.

As conditions for deleting each record, the region-contents correspondence management table also stores a 'Valid time' field, a 'Valid time after exit' field, a 'Number of valid accesses' field, and a 'Valid browser' field. These conditions for deletion are used only when they are set.

Referring back to Fig. 1, the communication controller 102 controls transmission and reception of information with the client 50 via a network 10.

The user authenticating unit 103 authenticates users. The user authenticating unit 103 can use any type of authentication method, such as authentication based on a user ID and a password transmitted from the client 50, authentication based on fingerprint information transmitted from the client 50, and authentication based on IC card information transmitted from the client 50.

When a user is authenticated by the user authenticating unit 103, he is permitted to refer to contents and the like, as described below. This increases the security of the contents. Since only authenticated users can make additions to the contents, the reliability of the contents is also increased.

The positional-information acquiring unit 109 acquires positional information relating to the position of the user authenticated by the user authenticating unit 103 from the positional-information providing server 20. The positional information acquired by the positional-information acquiring unit 109 includes a user ID indicating the user, the time when the user is detected, and coordinates of the user's position.

Based on the acquired positional information, the extracting unit 111 searches the location management table in the storing unit 101 and extracts the location of the user. If a plurality of locations include the position of the user, the extracting unit 111 extracts all of them.

When the output unit 110 explained below detects that a plurality of locations have been extracted by the extracting unit 111, the selection receiving unit 107 receives a selection of a desired location from the locations extracted by the extracting unit 111. This selection is made by the user using the client 50.

When the positional-information acquiring unit 109 acquires only one location including the position of the user, the shared-information acquiring unit 108 acquires contents corresponding to that location from the region-contents correspondence table. If a plurality of locations include the position of the user, when the selection receiving unit 107 receives a selection of a location, the shared-information acquiring unit 108 acquires contents corresponding to the selected location from the region-contents correspondence table. Note that the contents acquired by the shared-information acquiring unit 108 is limited to contents that the user is permitted to browse.

At the time of acquiring the contents, the shared-information acquiring unit 108 adds '1' to the access number stored in correspondence with the contents in the region-contents correspondence table. In this way, the contents-sharing server 100 can manage a correct access number.

When only one location is extracted by the extracting unit 111, the output unit 110 outputs contents in correspondence with the location acquired by the shared-information acquiring unit 108 to the client 50.

When the extracting unit 111 extracts a plurality of locations, the output unit 110 outputs selection screen information of the locations to the client 50. Consequently, the region-list display unit 54 of the client 50 displays a screen for selecting a location (region).

The user then selects a location (region) using an input device or the like. The region-selection receiving unit 53 of the client 50 thereby receives a selection of the location (region). The client 50 outputs the selected location (region) to the contents-sharing server 100. This enables the selection receiving unit 107 of the contents-sharing server 100 to receive the selection of the location.

After the selection receiving unit 107 receives the selection of the location and the shared-information acquiring unit 108 acquires the contents, the output unit 110 outputs the acquired contents as contents corresponding to the location selected by the user to the client 50.

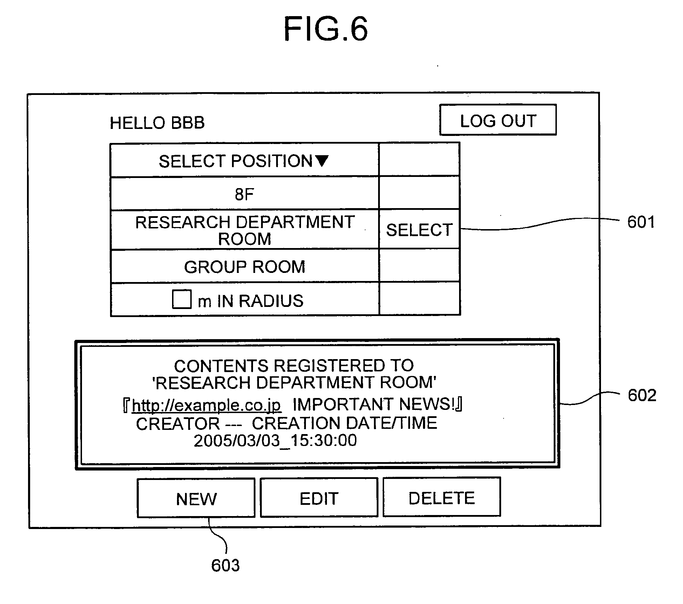

Fig. 6 is an example of a screen of contents displayed by the contents display unit 51 when a selection of a location from a user is received. As shown in Fig. 6, when there is a plurality of locations corresponding to the positional information of the user, the region-list display unit 54 displays a list of the locations (regions) in a selection box 601.

In Fig. 6, the region-list display unit 54 displays '8F', 'Research department room', and 'Group room' in the selection box 601. When the user selects a location from the selection box 601, the region-selection receiving unit 53 receives the selection of this location. The client 50 transmits information indicating the selected location to the contents-sharing server 100. That is, when there is a plurality of locations (regions) including positions of the user, the user can select a location he currently wishes to emphasize from the plurality of locations (regions). A plurality of locations including positions of the user are present due to the hierarchized structure of the locations (regions) described above.

When there is a plurality of contents corresponding to the selected location, the contents display unit 51 displays these contents.

Via the network 10, the communication controller 102 performs a reception process of location information indicating the selected location received by the client 50. Based on the received location information, the selection receiving unit 107 receives a selection of a location. The shared-information acquiring unit 108 acquires the contents corresponding to the selected location. The output unit 110 outputs the acquired contents to the client 50. The communication controller 102 performs communication control such that the output contents is transmitted to the client 50. This enables the contents display unit 51 to display the contents in a contents display box 602.

As shown in Fig. 6, a radius can be selected from the selection box 601 instead of a location. In this case, a location within a radius selected based on positional coordinates of the user's position is selected. The location selected by setting the radius is not limited to one included within the region of the radius. For example, a location that partially overlaps the region of the radius can be selected.

A screen for creating contents can be displayed by pressing 'New' 603 on the screen of Fig. 6. This screen will be explained in detail later. Contents can also be edited and deleted by pressing an 'Edit' button and a 'Delete' button. These operations can be performed based on the user's access authorization.

The deletion using the 'Delete' button can be limited such that only a user who has made an addition can delete the contents. This enables the user to protect contents that should not be deleted.

The deleting unit 104 deletes contents that are added to the region-contents correspondence table. For example, when the 'Delete' button of Fig. 6 is pressed, and when information identifying the contents and a command to delete the contents are input from the client 50 to the contents-sharing server 100, the deleting unit 104 deletes the contents.

The deleting unit 104 examines contents added to the region-contents correspondence table at a predetermined time, and deletes contents when a deletion condition set for the contents is satisfied. This deleting process executed by the deleting unit 104 based on deletion conditions is explained below. The predetermined time can be any time interval, such as every 30 seconds.

An added contents is often only temporarily shared by a plurality of users. Therefore, the deleting unit 104 can delete contents as appropriate according to a user's request, for example, that the contents the user added is deleted automatically when he leaves the room. Since unnecessary contents are thereby deleted, contents can be kept in an appropriate state at all times.

Any type of conditions can be set as deletion conditions of the deleting unit 104. For example, when four users are having a meeting in a conference room, if the contents added by a user 'CCC' is browsed by browsers 'DDD', 'EEE', and 'FFF', the information will be passed to everyone. Therefore, if the user 'CCC' sets a condition of 'delete when these three have browsed the contents', when the contents are deleted, he can ascertain that the information has been transmitted to everyone.

Also, the user 'CCC' can set an access number of '8', which is more than the number of users at the meeting, as the deletion condition. Even if one user makes a plurality of accesses, the possibility that other users can browse the contents before it is deleted increases.

By restricting the number of accesses in this manner, the deleting unit 104 enables the contents to be restrictively shared according to the users' requirements.

A case that where the user 'AAA' adds information he wishes to report to the entire floor will be explained. If the contents of this added information is 'Please contact the user 'AAA' while he is here', there is a possibility of confusion if other users can browse this contents after the user 'AAA' has departed. Therefore, the contents-sharing server 100 sets the 'Valid time after exit'. The deletion condition can be set such that the contents are deleted when a predetermined time elapses after the user 'AAA' leaves that location (that is, after his user position is no longer within the set region). While in the present embodiment, the location is one that corresponds to the contents, any location (region) that the user can move to is acceptable.

The deleting unit 104 can also delete the contents after the user 'AAA', who is at the meeting, moves from Conference room 1. This prevents users who are not related to the user 'AAA' from acquiring that contents, and thereby increases security.

The deleting unit 104 can also delete contents after their valid time elapses. When the deleting unit 104 sets deletion conditions such that contents are deleted after a predetermined time elapses in this manner, users can only browse contents with valid time limits.

Since the deleting unit 104 automatically deletes unnecessary contents in this manner, maintenance becomes easier.

When the client 50 creates a new contents, the newly created contents and its corresponding location are input to the input receiving unit 105. Where necessary, a browser, a group permitted to browse, a creator, and deletion conditions including elapsed time, access frequency, access members, and a time elapsed after exit, are also input to the input receiving unit 105.

The adding unit 106 adds the contents, locations and the like input to the input receiving unit 105 to the region-contents correspondence table of the contents DB.

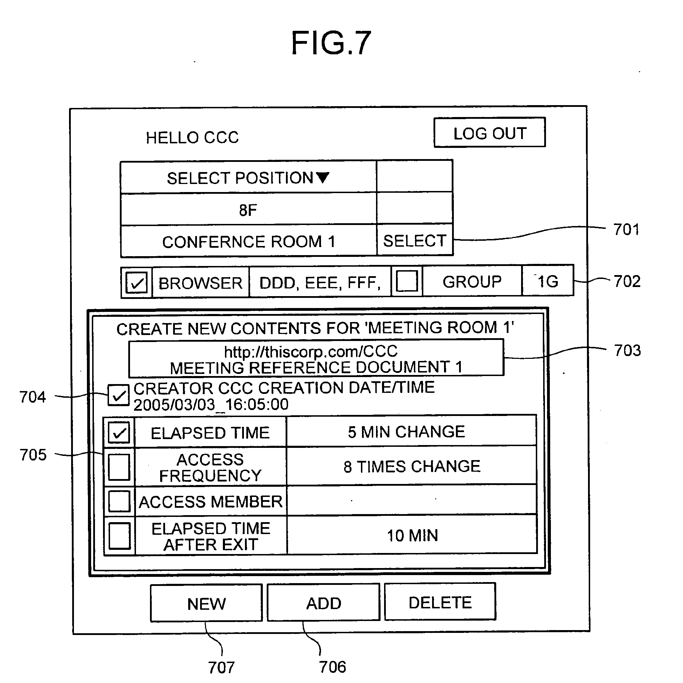

Fig. 7 is an example of a new contents creation screen displayed by the contents display unit 51 when the 'New' 603 button of Fig. 6 is pressed. On the screen of Fig. 7, a user selects a location from among a plurality of locations including positions of users in a selection box 701. Consequently, a location of a layer corresponding to the contents can be set.

From a browser/group setting box 702, the user sets a user or a group who are permitted to browse the contents. If the user makes no setting, any user in that location can browse the contents.

By making this type of setting possible, for example, when there is news that relates to a specific group while being unrelated to the location, the user can add contents after setting the browse authorization for the specific group. By making such addition possible, browsers can be restricted even for information intended for a wide region.

The user inputs the contents to a contents box 703. A check box 704 is used to select whether to display the name of the creator. The user sets conditions for deleting the newly created contents in a deletion condition setting box 705. Check boxes of items to be used as deletion conditions are ticked. This enables a plurality of deletion conditions to be set. Since a plurality of deletion conditions can be set, the contents can be deleted based on appropriate conditions according to the user's requirements. This makes maintenance easier.

After setting is complete, the user transmits the set information to the contents-sharing server 100 by pressing an 'Add' button 706. When the user wishes to create another contents, he presses a 'New' button 707, whereby the contents display unit 51 displays another new contents creation screen.

Thus the user can easily share the contents with other users. That is, even when users are carrying notebook PCs in their current office, there is a tendency to construct an environment where information on a network can be easily accessed. In that case, when a plurality of users are gathering information together and sharing it with other users nearby, it is extremely laborious even to transmit relevant news in a link, since this requires activation of e-mail software and transmitting, or the like.

The positional-information providing server 20, the contents-sharing server 100, and the client 50 according to the present embodiment form a contents-sharing system that is effective in such cases as a unit that can detect the physical position of the users and share information between users nearby.

According to this contents-sharing system, the positional-information providing server 20 can detect the physical position of a user or a device, and the contents-sharing server 100 can acquire positional information. Therefore, the user can associate with his own physical position and easily make additions to them. The added contents can then be shared with other users in that area.

The communication controller 102 of the contents-sharing server 100 receives the set information, and receives input from the input receiving unit 105. The adding unit 106 adds the input information as a record to the region-contents correspondence table.

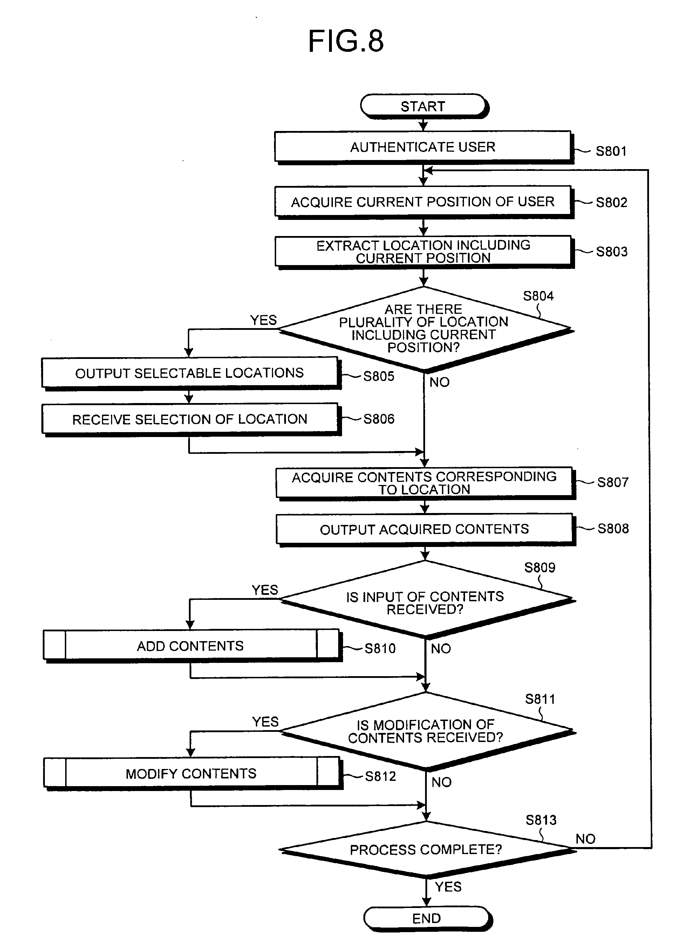

Subsequently, a process of authenticating a user, browsing the contents, and adding and changing the contents where necessary in the contents-sharing server 100 according to the present embodiment configured as described above will be explained. Fig. 8 is a flowchart of the process procedure in the contents-sharing server 100 according to the embodiment.

Firstly, the user authenticating unit 103 authenticates a user based on information transmitted from the client 50 (step S801).

When the user is authenticated, the positional-information acquiring unit 109 acquires current positional information of the authenticated user (step S802).

The extracting unit 111 extracts a location including the position of the user from the location management table of the contents DB (step S803).

The output unit 110 determines whether a plurality of locations have been extracted (step S804).

When it is determined that a plurality of locations have been extracted (step S804: Yes), the output unit 110 outputs screen information including a selection box for selecting a location to the client 50 (step S805).

Based on the location information selected by the client 50, the selection receiving unit 107 receives a selection of a location (step S806).

The shared-information acquiring unit 108 acquires contents corresponding to the location from the region-contents correspondence table (step S807). Specifically, when the output unit 110 determines that there is one location (step S804: Yes), the shared-information acquiring unit 108 acquires the contents corresponding to that location. When the selection receiving unit 107 receives the selection of the location (step S806), the shared-information acquiring unit 108 acquires the contents corresponding to the selected location.

The output unit 110 outputs the contents acquired by the shared-information acquiring unit 108 to the client 50 (step S808). Consequently, the contents corresponding to the location is displayed at the client 50.

The input receiving unit 105 determines whether the newly created contents and the information corresponding to the contents have been input (step S809). If the newly created contents and so on have not been input (step S809: No), no particular process is performed.

When the input receiving unit 105 receives the input of the newly created contents and so on (step S809: Yes), the adding unit 106 performs a process of adding them (step S810). This addition procedure will be explained in detail later.

The input receiving unit 105 then determines whether change information of the contents has been input from the client 50 (step S811). If change information of the contents has not been input (step S811: No), no particular process is performed.

When the input receiving unit 105 has received change information of the contents (step S811: Yes), the adding unit 106 performs a process of changing the contents (step S812). The change process performed by the adding unit 106 can include any type of change process, whether it is currently known.

The input receiving unit 105 receives input indicating whether the display of the contents at the client 50 (step S813) has been ended. If input is not received (step S813: No), the positional-information acquiring unit 109 restarts the procedure from acquiring positional information of the user (step S803).

When the input receiving unit 105 receives input indicating that the contents has been displayed at the client 50 (step S813: Yes), a logout process of the user using the client 50 is performed, and processing with respect to the client 50 ends.

By the process procedure described above, the contents-sharing server 100 can allow the user to browse the contents corresponding to the location in the layer to which the user is paying attention. That is, the contents can be provided as appropriate to a user or an object at the location.

It is also possible to create a new contents corresponding to a location in a desired layer. Note that the process procedure described above is one example of a process procedure of authenticating a user, browsing contents, and adding and changing the contents according to the present embodiment, and the invention is not limited thereto.

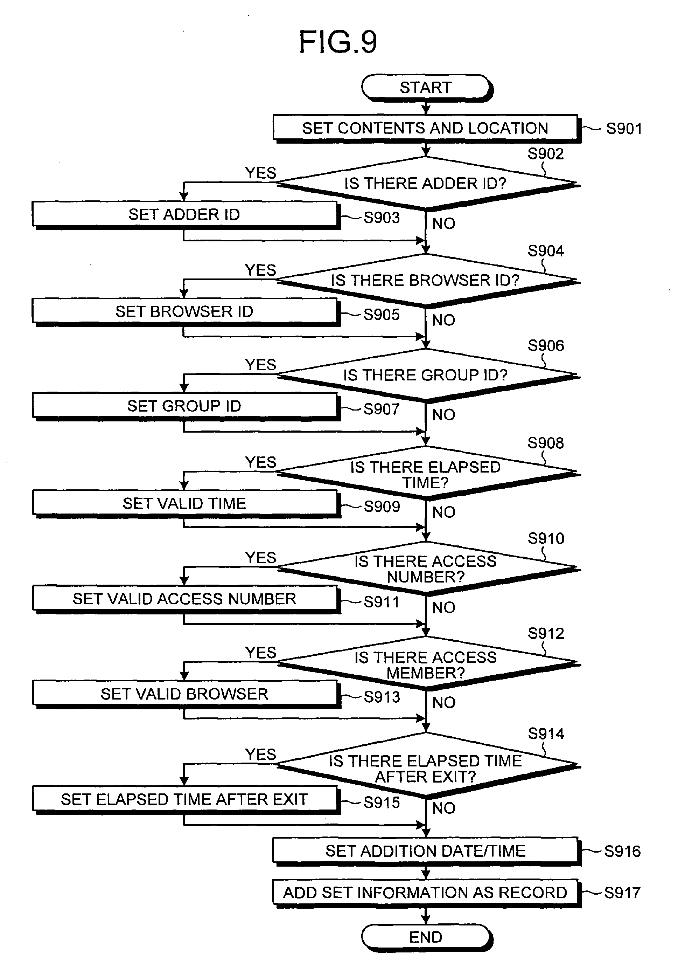

Subsequently, a process of adding contents in the adding unit 106 of the contents-sharing server 100 according to the embodiment having the above configuration will be explained. Fig. 9 is a flowchart of this process procedure in the adding unit 106 according to the present embodiment.

Based on information input by the input receiving unit 105, the adding unit 106 sets the contents and the location (step S901). That is, the setting performed by the adding unit 106 is a setting process to a contents structure prepared in the memory.

The adding unit 106 determines whether the information input from the input receiving unit 105 includes an adder ID (step S902). When the adding unit 106 determines that the information does not include an adder ID (step S902: No), no particular process is performed. In this case, the contents are added anonymously.

When the adding unit 106 determines that the information includes an adder ID (step S902: Yes), the adding unit 106 sets the adder ID (step S903). In the example screen shown in Fig. 7, when the check box 704 is ticked, the adding unit 106 deems the input creator to be the user ID.

The adding unit 106 then determines whether the information input from the input receiving unit 105 includes a browser ID (step S904). When the adding unit 106 determines that the information does not include a browser ID (step S904: No), no particular process is performed.

When the adding unit 106 determines that the information includes a browser ID (step S904: Yes), the adding unit 106 sets the browser ID (step S905). In the example screen shown in Fig. 7, a browser input from the browser/group setting box 702 is deemed as this browser ID.

The adding unit 106 then determines whether the information input from the input receiving unit 105 includes a group ID (step S906). When the adding unit 106 determines that the information does not include a group ID (step S906: No), no particular process is performed.

When the adding unit 106 determines that the information includes a group ID (step S906: Yes), the adding unit 106 sets the group ID (step S907). In the example screen shown in Fig. 7, a group input from the browser/group setting box 702 is deemed as this group ID.

The adding unit 106 then determines whether the information input from the input receiving unit 105 includes an elapsed time (step S908). When the adding unit 106 determines that the information does not include an elapsed time (step S908: No), no particular process is performed.

When the adding unit 106 determines that the information includes an elapsed time (step S908: Yes), the adding unit 106 sets a valid time indicating a time after the elapsed time elapses from the present time (step S909). The elapsed time is input only when there is a tick in the check box of the elapsed time item of the deletion condition setting box 705 in the example screen shown in Fig. 7. When a valid time is set, the contents are deleted after a predetermined time elapses after adding the contents.

The adding unit 106 then determines whether the information input from the input receiving unit 105 includes an access number (step S910). When the adding unit 106 determines that the information does not include an access number (step S910: No), no particular process is performed.

When the adding unit 106 determines that the information includes an access number (step S910: Yes), the adding unit 106 sets the access number (step S911). The input number is set as the access number only when there is a tick in the check box of the access frequency item in the deletion condition setting box 705 in the example screen shown in Fig. 7. By setting the access number, the contents are deleted when it is accessed a number of times equal to or more than the specified number.

The adding unit 106 then determines whether the information input from the input receiving unit 105 includes a flag indicating an access member (step S912). When the adding unit 106 determines that the information does not include a flag indicating an access member (step S912: No), the adding unit 106 sets a default of '0' as the valid browser.

When it is determines that the information includes a flag indicating an access member (step S912: Yes), the adding unit 106 sets '1' as the valid browser (step S913). This access member is set as the transmitted flag only when there is a tick in the check box of the access member item in the deletion condition setting box 705 in the example screen shown in Fig. 7. When the valid browser is set to '1', the contents are deleted when it is browsed by all users in the same location.

The adding unit 106 then determines whether the information input from the input receiving unit 105 includes an elapsed time after exit (step S914). When the adding unit 106 determines that the information does not include an elapsed time after exit (step S914: No), no particular process is performed.

When it is determined that the information includes an elapsed time after exit (step S914: Yes), the adding unit 106 sets the elapsed time after exit (step S915). The elapsed time after exit is input only when there is a tick in the check box of the elapsed time after exit item in the deletion condition setting box 705 in the example screen shown in Fig. 7. By setting the elapsed time after exit, the contents are deleted when a predetermined time elapses after the user is last detected.

The adding unit 106 sets the time input from the input receiving unit 105 as the addition date/time (step S916).

The adding unit 106 then associates the pieces of information set in the above steps, and adds the information as records in the region-contents correspondence table (step S917).

By the above process procedure, the adding unit 106 can add newly created contents based on detailed information set by the user. Note that the process procedure described above is merely one example of addition by the adding unit 106 of the contents-sharing server 100, and the invention is not limited thereto.

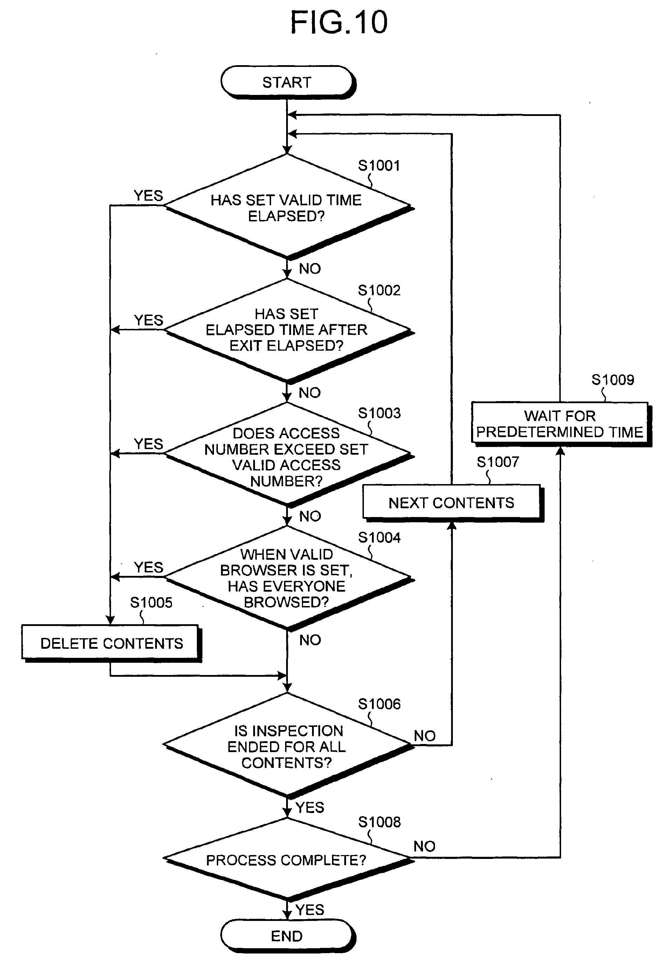

A periodical-contents deleting process in the deleting unit 104 of the contents-sharing server 100 according to the embodiment configured as above will be explained next. Fig. 10 is a flowchart of the contents deleting process procedure in the deleting unit 104 according to the present embodiment. The first processing target to be set is the first record in the region-contents correspondence table.

If a valid time is set for the contents in the set record, the deleting unit 104 determines whether the valid time has elapsed (step S1001).

When no valid time is set or when the valid time has not elapsed (step S1001: No), and if a valid time after exit is set for the contents of the same record, the deleting unit 104 determines whether the valid time after exit has elapsed since the last user exited the location corresponding to the contents (step S1002).

When a valid time after exit is not set or the valid time after exit has not elapsed (step S1002: No), and if a valid access number is set for the contents of the same record, the deleting unit 104 determines whether the number of accesses exceeds the valid access number (step S1013).

When a valid access number is not set or the number of accesses has not exceeded the valid access number (step S1013: No), and if a valid browser is set for the contents of the same record, the deleting unit 104 determines whether all browsers have referred to the contents (step S1004).

When a valid browser is not set or all browsers have not referred to the contents (step S1004: No), no particular process is performed.

When the valid time has elapsed (step S1001: Yes), when the elapsed time after exit has elapsed (step S1002: Yes), when the number of accesses exceeds the valid access number (step S1003: Yes), or when all the browsers have referred to the contents (step S1004: Yes), the deleting unit 104 deletes that contents from the region-contents correspondence table (step S1005).

The deleting unit 104 then determines whether an inspection has been made regarding whether deletion conditions for the contents of all records in the region-contents correspondence table are satisfied (step S1006).

When it is determined that there is a record that has not been inspected (step S1006: No), the deleting unit 104 sets the next contents (step S1007).

When all the records have been inspected (step S1006: Yes), the deleting unit 104 determines whether a command to end monitoring is received from a user (step S1008).

When no command to end the monitoring is received (step S1008: No), the deleting unit 104 waits for a predetermined time (step S1009). After waiting, the deleting unit 104 repeats the above processes from the first record of the region-contents correspondence table.

When a command to end the monitoring is received from a user (step S1008: Yes), the deleting unit 104 terminates the monitoring process.

By the process procedure described above, the deleting unit 104 can automatically delete contents based on conditions set by the user. Note that the process procedure described above is merely one example of regular deletion of contents by the deleting unit 104 of the contents-sharing server 100, and the invention is not limited thereto.

The contents-sharing server 100 according to the present embodiment stores locations of different sizes in correspondence with contents. This enables appropriate contents to be provided according to the size of a location selected by a user.

The present invention is not limited to the embodiments described above, and various changes such as modified examples described below can be made.

In the first embodiment, conditions for displaying contents include the selection of a location corresponding to contents, and the awarding of a browse authorization to a browser and the like. However, these conditions are not limitative. A first modified example using conditions that are different to those of the above embodiment will be explained.

In this modified example, a user can add contents from a client in correspondence with predetermined conditions and parameters. These predetermined conditions and parameters can be set using any method, whether it is currently known.

Conceivably, the conditions and parameters that are set are user IDs indicating other users who are near the user, a specific ID indicating an object nearby, and such like as parameters, and the detection of these IDs as conditions. The adding unit of the modified example adds such parameters and conditions to the region-contents correspondence table in correspondence with the contents. A shared-information acquiring unit acquires the contents from the region-contents correspondence table only when the environment at the time of addition is reproduced. This enables the client to refer to the contents. 'When the environment at the time of addition is reproduced' signifies the detection nearby of a user or an object having a user ID and a specific ID added as parameters.

For example, if users 'AAA' and 'BBB' are present when the contents are added, those contents cannot be referred to unless users 'AAA' and 'BBB' are both present. Furthermore, if a cashbox key is detected near the user 'AAA' when the contents are added, those contents cannot be referred to unless the user 'AAA' and the cashbox key are both detected nearby.

The conditions of the above embodiment can of course be combined when setting conditions for referring to contents.

Thus, the contents-sharing server of this modified example can set appropriate conditions for permitting reference to contents according to users' requirements.

In the contents-sharing system according to the embodiment described above, hierarchized locations (regions) are displayed when a user wishes to refer to contents. However, when a user wishes to refer to contents, for example, areas of different sizes can be displayed instead of the hierarchized locations. When the user selects an area, the contents-sharing system displays contents corresponding to that area.

In a second modified example, the contents-sharing server manages contents in correspondence with positions. A client displays a list such as 'within 2 meters in radius', 'within 5 meters in radius', 'within 10 meters in radius', and the like. These areas are centered around the position of the user. When the client receives a selection of one of these areas from the user, contents corresponding to positions included in the selected area are displayed by processes of the contents-sharing server and the client. In this way, information can be displayed according to the sizes of the regions without managing the hierarchized locations in a table such as that mentioned above.

In the contents-sharing system according to the first embodiment, as shown in Fig. 6, the contents display unit 51 of the client 50 displays contents in correspondence with one region (location) selected by the user. However, the present embodiment does not limit the region (location) that can be selected by the user to one. A third modified example that allows a plurality of regions (locations) to be selected will be explained.

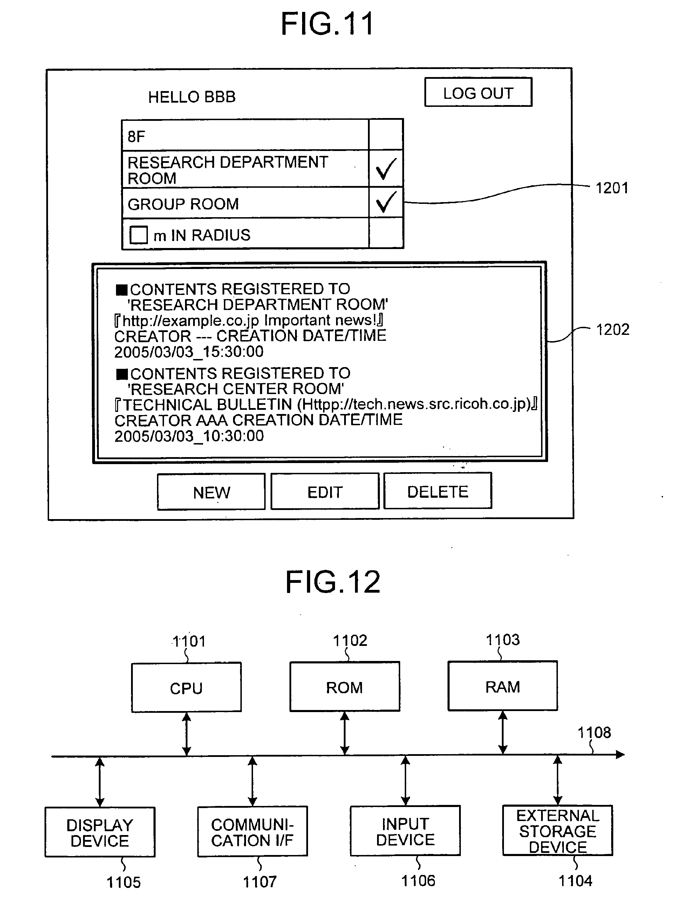

Fig. 11 is an example of a screen displayed when a contents display unit of a client according to this modified example receives a selection of a location from a user. As shown in Fig. 11, a region-selection receiving unit displays a selection box 1201. The selection box 1201 includes a check box for each location, enabling each location to be individually ticked.

The contents display unit displays the contents corresponding to the ticked location. When a plurality of locations are ticked, the contents display unit displays the contents for each selected location in the contents display box 602. In Fig. 11, since 'Research department room' and 'Group room' are ticked in the selection box 1201, contents corresponding to 'Research department room' and 'Group room' are displayed in the contents display box 602. A process procedure of acquiring the contents corresponding to the locations is the same as that in the embodiment described above, and its explanation is omitted.

Fig. 12 is a hardware configuration of a PC that executes a program for realizing the functions of a contents-sharing server. The contents-sharing server of the present embodiment has a hardware configuration used in a normal computer, including a control apparatus such as a central processing unit (CPU) 1101, storage devices such as a read only memory (ROM) 1102 and a random access memory (RAM) 1103, an external storage device 1104 such as a hard disk drive (HDD) and a compact disk (CD) drive device, a display device 1105 such as a display unit, an input device 1106 such as a keyboard and a mouse, a communication interface (I/F) 1107, and a bus 1108 that connects these apparatuses and devices.

A contents-sharing program executed by the contents-sharing server of the present embodiment is stored in a file of an installable or executable format, and is recorded on a computer-readable recording medium such as a CD-ROM, a flexible disk (FD), a CD-R, a digital versatile disk (DVD), or the like.

The contents-sharing program executed by the contents-sharing server of the present embodiment can be stored in a computer connected to a network such as the Internet, and provided by downloading via the network. The contents-sharing program executed by the contents-sharing server of the present embodiment can also be provided and distributed via a network such as the Internet.

The contents-sharing program of the present embodiment can also be provided by incorporating it beforehand in a ROM or the like.

The contents-sharing program executed by the contents-sharing server of the present embodiment has a module configuration including the units described above (a communication controller, a user authenticating unit, a deleting unit, an input receiving unit, an adding unit, a selection receiving unit, a shared-information acquiring unit, a positional-information acquiring unit, and an output unit). As the actual hardware, these units are loaded into a main storage device by making the CPU 1101 read the contents-sharing program from the recording medium and execute it, such that the communication controller, the user authenticating unit, the deleting unit, the input receiving unit, the adding unit, the selection receiving unit, the shared-information acquiring unit, the positional-information acquiring unit, and the output unit are created in the main storage device.

As described above, the information processing apparatus, the information processing method, the display method, and the information processing program according to the present invention are effective in techniques for sharing information that a plurality of users can refer to, and are particularly suitable in techniques for providing different information according to hierarchized regions including positions of the users.

Additional advantages and changes will readily occur to those skilled in the art. Therefore, embodiments of the present invention are not limited to the specific embodiment described above. Accordingly, various changes can be made without departing from the spirit or scope of the general inventive concept as defined by the appended claims and their equivalents.

According to the contents-sharing server of the embodiment and modified examples described above, a location is selected from hierarchized locations of users or objects, and contents corresponding to the selected location are output. Therefore, the contents can be provided appropriately.

According to the contents-sharing server of the embodiment and modified examples described above, contents are associated with locations where they can be referred to, and added to a region-contents correspondence table. Therefore, contents can be appropriately provided to users or objects at these locations.

Although the invention has been described with respect to a specific embodiment for a complete and clear disclosure, the appended claims are not to be thus limited but are to be construed as embodying all changes and alternative constructions that may occur to one skilled in the art that fairly fall within the basic teaching herein set forth.

## Claims

1. An information processing apparatus comprising:
a storing unit (101) that stores region correspondence information in which each of regions that are hierarchized from a predetermined region toward a narrow region is associated with reference information that can be referred to at the region;
a positional-information acquiring unit (109) that acquires positional information relating to a position of an object or a user in the predetermined region;
an extracting unit (111) that extracts a hierarchized region where the object or the user exists by searching the stored region correspondence information based on the acquired positional information;
a selection receiving unit (107) that receives a selection of a desired region from among the extracted hierarchized regions;
an information acquiring unit (108) that acquires the reference information corresponding to the selected region from the region correspondence information; and
an output unit (110) that outputs the acquired reference information.

2. An information processing apparatus according to claim 1, further comprising:
an input receiving unit (105) that receives an input of the reference information and a hierarchized region where the reference information can be referred to; and
an adding unit (106) that associates the input reference information with the hierarchized region, and adds the associated information to the region correspondence information.

3. An information processing apparatus according to claim 1, further comprising:
a user authenticating unit (103) that authenticates a user who refers to the reference information, wherein
the input receiving unit (105) receives the input of the reference information and the hierarchized region from the authenticated user.

4. An information processing apparatus according to claim 3, wherein
the storing unit (101) further associates at least one of user authentication information indicating a user who makes an input and time information indicating a time when the input is made, and stores the associated information as the region correspondence information, and
the adding unit (106) associates at least one of the user authentication information and the time information, and adds the associated information to the region correspondence information.

5. An information processing apparatus according to claim 2, wherein
the storing unit (101) further stores user identification information that indicates a user who refers to the reference information,
the input receiving unit (105) further receives an input of the user identification information, and
the adding unit (106) adds the input user identification information to the region correspondence information.

6. An information processing apparatus according to claim 2, wherein
the input receiving unit (105) further receives an input of deletion condition information that is associated with the reference information and indicates conditions for deleting the reference information, and
the information processing apparatus further comprises a deleting unit (104) that deletes the reference information associated with the deletion condition information from the region correspondence information, based on the input deletion condition information.

7. An information processing apparatus according to claim 6, wherein
the input receiving unit (105) receives an input of a predetermined time from a time of receiving the input as the deletion condition information, and
the deleting unit (104) deletes the reference information from the region correspondence information when the predetermined time elapses from a time of performing a process of receiving the input.

8. An information processing apparatus according to claim 6, wherein
the input receiving unit (105) further receives an input of user region information indicating a region where a user or an object can move to, as the deletion condition information, and
the deleting unit (104) deletes the reference information from the region correspondence information when a position indicated by the acquired positional information is no longer included in the region indicated by the user region information.

9. An information processing apparatus according to claim 6, wherein
the input receiving unit (105) further receives an input of a plurality pieces of deletion condition information, and
the deleting unit (104) deletes the reference information corresponding to the deletion condition information from the region correspondence information when one of the deletion conditions indicated by the pieces of deletion condition information is satisfied.

10. An information processing apparatus according to claim 1, wherein
the selection receiving unit (107) receives the selection of the desired region from names indicating the extracted regions by searching the stored region correspondence information based on the acquired positional information.

11. An information processing method comprising:
storing region correspondence information in which each of regions that are hierarchized from a predetermined region toward a narrow region is associated with reference information that can be referred to at the region;
acquiring positional information relating to a position of an object or a user in the predetermined region;
extracting a hierarchized region where the object or the user exists by searching the stored region correspondence information based on the acquired positional information;
first receiving including receiving a selection of a desired region from among the extracted hierarchized regions;
acquiring the reference information corresponding to the selected region from the region correspondence information; and
outputting the acquired reference information.

12. An information processing method according to claim 11, further comprising:
Second receiving including receiving an input of the reference information and a hierarchized region where the reference information can be referred to; and
reference information adding including
associating the input reference information with the hierarchized region; and
adding the associated information to the region correspondence information.

13. An information processing method according to claim 11, further comprising:
authenticating a user who refers to the reference information, wherein
the receiving includes receiving the input of the reference information and the hierarchized region from the authenticated user.

14. An information processing method according to claim 13, wherein
the storing includes
associating at least one of user authentication information indicating a user who makes an input and time information indicating a time when the input is made, and stores the associated information as the region correspondence information; and
adding the information to the region correspondence information.

15. An information processing method according to claim 12, wherein
the second receiving further includes receiving an input of the user identification information, and
the reference information adding includes adding the input user identification information to the region correspondence information.

16. An information processing method according to claim 12, wherein
the second receiving further includes receiving an input of deletion condition information that is associated with the reference information and indicates conditions for deleting the reference information, and
the information processing method further comprises deleting the reference information associated with the deletion condition information from the region correspondence information, based on the input deletion condition information.

17. An information processing method according to claim 16, wherein
the second receiving further includes receiving an input of a predetermined time from a time of receiving the input as the deletion condition information, and
the deleting includes deleting the reference information from the region correspondence information when the predetermined time elapses from a time of performing a process of receiving the input.

18. An information processing method according to claim 16, wherein
the second receiving further includes receiving an input of user region information indicating a region where a user or an object can move to, as the deletion condition information, and
the deleting includes deleting the reference information from the region correspondence information when a position indicated by the acquired positional information is no longer included in the region indicated by the user region information.

19. An information processing method according to claim 16, wherein
the second receiving further includes receiving an input of a plurality pieces of deletion condition information, and
the deleting includes deleting the reference information corresponding to the deletion condition information from the region correspondence information when one of the deletion conditions indicated by the pieces of deletion condition information is satisfied.

20. An information processing method according to claim 11, wherein
the first receiving includes receiving the selection of the desired region from names indicating the extracted regions by searching the stored region correspondence information based on the acquired positional information.

21. A method of displaying reference information, the method comprising:
displaying, from among a plurality of regions that are hierarchized from a predetermined region toward a narrow region, a region including a position of a user or an object for each hierarchy;
receiving a selection of a desired region from among the displayed regions; and
displaying reference information that can be referred to at the selected region.

22. A computer program product comprising a computer usable medium having computer readable program codes embodied in the medium that when executed causes a computer to execute:
storing region correspondence information in which each of regions that are hierarchized from a predetermined region toward a narrow region is associated with reference information that can be referred to at the region;
acquiring positional information relating to a position of an object or a user in the predetermined region;
extracting a hierarchized region where the object or the user exists by searching the stored region correspondence information based on the acquired positional information;
first receiving including receiving a selection of a desired region from among the extracted hierarchized regions;
acquiring the reference information corresponding to the selected region from the region correspondence information; and
outputting the acquired reference information.
